Europäisches Patentamt

**European Patent Office**

**Office européen des brevets**

(19)

(11) Publication number: **0 461 772 A2**

# EUROPEAN PATENT APPLICATION

(12)

(21) Application number: **91304646.2**

(22) Date of filing: **22.05.91**

(51) Int. Cl.⁵: **C08J 7/04, C09D 129/04**

(30) Priority: **29.05.90 US 530038**

(43) Date of publication of application:
**18.12.91 Bulletin 91/51**

(84) Designated Contracting States:
**AT BE CH DE DK ES FR GB GR IT LI LU NL SE**

(71) Applicant: **MOBIL OIL CORPORATION**
**3225 Gallows Road**
**Fairfax, Virginia 22037-0001 (US)**

(72) Inventor: **Min, Taeik J.**
**15 Laureldale Drive**
**Pittsford, New York 14534 (US)**
Inventor: **Touhsaent, Robert Edward**
**65 Valley Brook Drive**
**Fairport, New York 14450 (US)**

(74) Representative: **Colmer, Stephen Gary et al**
**Patent Department c/o Mobil Services**
**Company Limited Mobil Court 3 Clements Inn**
**London WC2A 2EB (GB)**

(54) **Low oxygen transmissive film.**

(57) A low oxygen transmissive film combination having a substrate with a surface having a surface free energy of at least about 35 dynes/cm, a primer coating on one or both sides and an oxygen transmissive inhibiting layer of a cross-linked poly(vinylalcohol) on one or both primer layers.

EP 0 461 772 A2

Jouve, 18, rue Saint-Denis, 75001 PARIS

This invention relates to a flexible, multilayer film combination having low transmissive characteristics.

Certain polymeric films employed for the packaging of foods inherently permit the transmission of oxygen from the outside of the film to the inside of a package made up of the film. Such ingress of oxygen permits rapid deterioration of foods packaged in such a container; therefore its exclusion or control is desired.

It is an object of the present invention to decrease the oxygen transmission rate of such films.

In accordance with the present invention, there is provided a film combination which comprises a polymeric substrate susceptible of transmitting oxygen, at least one side thereof having been treated to a surface-free energy of at least about 35 dynes/cm, that side having a primer coating thereon; and, on the primer coating, an oxygen transmission inhibiting layer comprising a cross-linked poly(vinylalcohol).

If desired, one side of the film has a heat seal layer thereon, suitable an acrylic layer.

The present invention also relates to a process for the preparation of a low oxygen transmissive film combination which comprises providing a polymeric substrate film; treating at least one surface thereof so as to have a surface free energy of at least 35 dynes/cm; applying a primer coating to at least one of the treated surfaces; and applying a poly (vinyl alcohol) and cross-linking composition to at least one primed surface. The polymeric substrate film is preferably oriented, especially biaxially oriented.

The substrates contemplated herein include any polymeric film substrate oriented or unoriented which inherently permits the transmission of oxygen and wherein the utility of such film would call for a minimization of the transmission of oxygen. In most cases, the source of the oxygen referred to herein is atmospheric oxygen. While nylon, polyethylene terephthalate and polycarbonate films are contemplated herein, a particularly preferred class of films are the polyolefins. Within the polyolefin class, homopolymers and copolymers of propylene are preferred. Particularly preferred are isotactic polypropylene containing at least 80% by weight of isotactic polypropylene. The preferred base substrate layer can be homopolypropylene having a melting point range of from about 321°-336°F. A commercially available material of this description is ARCO W472. The preferred substrate can also be coextruded with a thin skin layer, on one or both sides, comprising from 2 to 12% of the total thickness, of a copolymer, suitably a random copolymer, of propylene and another olefin, e.g., ethylene or butene-1. The other olefin can be present in the copolymer in an amount from 1 to 7 wt%.

In order effectively to inhibit the amount of oxygen transmitted through the base layer, the base layer must be 1) treated to a surface free energy of at least about 35 dynes/cm, 2) have a primer coating applied thereto, and 3 ) a coating of an oxygen transmission inhibiting layer of a cross-linked poly(vinylalcohol) applied thereto.

The preferred substrate must be properly prepared to receive the primer layer followed by the cross-linked poly(vinylalcohol). This proper treatment involves treating the surface to a surface tension level of at least 35 and preferably from 38 to 45 dynes/cm in accordance with ASTM Standard D2578-84. The treatment can be flame treatment, plasma treatment, chemical treatment or corona discharge treatment. Flame treatment and corona discharge treatment are preferred with corona discharge treatment being particularly preferred.

Commercially available corona discharge treatment equipment can be obtained from Solo Systems, Inc., Garland, Texas; Corotec Corporation, Collinsville, Connecticut; Softal Electronics, Hamburg, W. Germany; and other. Using, for example, Softal Electronics equipment, a treater can have an air gap of about 0.050 in. When treating polypropylene film of about 0.9 mils. The film can be treated to 42 to 44 dynes/cm.

After this treatment, a suitable primer material is coated onto the treated surface.

Preferred primer materials are those disclosed in U.S. Patent 4,564,559. These include a primer produced by condensing a monoaldehyde with and interpolymer of acrylamide or methacrylamide and at least one other unsaturated monomer. Further included is a material resulting from condensing aminoaldehyde with acrylamide or methacrylamide and subsequently interpolymerizing the condensation product with at least one other unsaturated monomer in the presence of a $C_1$ to $C_6$ alkanol. A preferred primer coating resin of this type comprises a copolymer containing up to 90% by weight of styrene, up to 80% by weight of an alkyl acrylate, up to 15% by weight of methacrylic acid and 5% to 25% by weight of acrylamide which has been condensed with a solution of formaldehyde in n-butanol containing from 0.2 to 3 equivalents of formaldehyde for each amide group in the copolymer. Another primer resin of this type is a 50% solid solution of a copolymer resin containing 38.5 parts of styrene, 44 parts of ethyl acrylate, 2.5 parts of ethacrylic acid and 15 parts of acrylamide which has be condensed with 5.2 parts of formaldehyde in n-butanol.

A particularly preferred primer material for the structure contemplated herein has been found to be poly(ethyleneimine). The imine primer provides an overall adhesively active surface for thorough and secure bonding with the subsquently applied cross-linked poly(vinylalcohol). It has been found that an effective coating solution concentration of the poly(ethyleneimine) applied from either aqueous or organic solvent media, such as ethanol, is a solution comprising about 0.1 to 0.6% by weight of the poly(ethyleneimine). A commercially available material of this type is known as Polymin P, a product of BASF-Wyandotte Corporation.

Another particularly preferred primer material is the reaction product of an epoxy resin with an acidified aminoethylated vinyl polymer. The contemplated epoxy resins are glycidyl ethers of polyhydroxy compounds. Typical polyhydroxy compounds which may be used include bisphenol A, ring-substituted bisphenol A, resorcinol, hydroquinone, phenol-formaldehyde, Novolac resins, aliphatic diols, such as ethylene glycol, propylene glycol, 1, 4-butanediol, 1,6-hexane-diol, glycerol, lower alkyl hydantoins or a mixture thereof. The preferred epoxy resins of the present invention are those made by the glycidation reaction between epichlorohydrin and bisphenol A. Epoxy resins of this type are commonly classified by their epoxy equivalent weight (EEW) which is defined by the weight of resin in grams which contains one gram equivalent of epoxy groups. Resins with an EEW ranging from 170 to 280 may be used in the present invention, but the preferred range is 180 to 210.

Although the specific structure of the epoxy resin is not critical to the primer employed in the present invention, important considerations in the selection of the epoxy resin revolve around its physical state. For example, it must be liquid and capable of being readily dispersed or dissolved with the second component or curing agent as described hereinbelow. If the epoxy resin is of low viscosity, it may be stirred directly into second component, i.e., curing agent, however, it is preferred to employ the epoxy resin in an aqueous emulsion.

The second component in the epoxy primer composition of the present invention is an amino modified acrylic polymer which is water soluble. This polymer is a curing agent for the epoxy compound. The preferred material is described in U.S. Patent No. 3,719,629, the disclosure of which is incorporated herein by reference. This material may be generically described as an acidified aminoethylated interpolymer having pendent aminoalkylate groups. This material is produced by polymerizing acrylate, methacrylate, styrene or other suitable monomers with sufficient methacrylic or acrylic acids to give a -COOH content of 7.5 to 12.5%. Solvent polymerization techniques are preferred. The polymer is then reacted with ethyleneimine monomer and acidified with hydrochloric acid to render the polymer water-soluble.

In one embodiment of the present invention, a liquid epoxy resin is emulsified in a solution of the curing agent by rapid stirring, the resultant dispersion is diluted with water to the desired concentration for coating, usually from 2 to 20% solids. When mixing the epoxy resin with the curing agent, it is generally preferred to use a stochiometric equivalent balance of epoxy and amine groups. However, it has been found that the stochiometric ratio may be varied over a wide range, from 1 epoxy to 3 amine groups through 3 epoxy groups to 1 amine group. Any of the above described primers can be employed in the range of 0.001 to 3.5 g/m².

The poly(vinylalcohol) employed herein can be any commercially available material. For example, ELVANOL 71-30, an E. I. duPont product. The poly(vinylalcohol) coating solution is prepared by dissolving the polymer in hot water, cooling and mixing both with a suitable cross-linking agent and an acid catalyst. The cross-linking agent can be a melamine- or urea-formaldehyde resin. Commercially available cross-linkers also would include PAREZ 613, a methylated melamine formaldehyde; CYMEL 373, a methylated melamine formaldehyde; CYMEL 401, a trimethylol melamine urea formaldehyde, glyoxal or borax. An acid catalyst, e.g., ammonium sulfate, ammonium chloride, sulfuric acid, nitric acid ammonium nitrate will effectively catalyze these systems.

Cross-linking is carried out to make the poly(vinylalcohol) less moisture sensitive but it is essential that this does not occur before the coating weight is applied and evenly distributed. This is effected by making up the aqueous solution so that the initial concentration is too low this occur but, as drying occurs, the concentration increases and the rate of cross-linking is heightened.

Suitable concentrations have been found to be from 1 to 10, preferably from 4 to 8 wt% of the solution being polymer plus cross-linking agent plus catalyst. If the solids content is higher, the solution becomes too viscous; if lower, good water resistance is not obtained. From about 5% to 30%, typically 15% cross-linking agent is used with from 0% to 7.5%, typically 2% of the acid catalyst. A preferred formulation comprises the following solids content: 85.5 wt% poly(vinylalcohol); 12.8 wt% methylated melamine formaldehyde; and 1.7 wt% ammonium chloride (NH₄Cl).

The aqueous poly(vinylalcohol) solution was prepared by dissolving sufficient ELVANOL 71-30 in hot water to form an 8 wt% solution which was then cooled. To this solution was added a 20 wt% aqueous melamine formaldehyde solution and a 5 wt% aqueous ammonium chloride solution to provide the preferred formulation recited above. The cross-linked poly(vinylalcohol) can be present in from 0.2 to 3 g/m².

The cross-linked poly(vinylalcohol) may be on one, or on both sides, of the film.

## EXAMPLE

A homopolymer polypropylene core is coextruded with skin layers of an ethylene-propylene random copolymer. The random copolymer contains approximately 3-5% by weight of ethylene. The extruded film is biaxially oriented to 4-5 times machine direction and 7-10 times traverse direction to yield a film having a thickness of approximately 1 mil. The thickness of the skin layers is approximately 12% of the film and are approximately of equal thickness. This film combination is corona discharge treated in accordance with commonly employed prior art techniques to produce a surface with a wetting tension of about 42 dynes/cm. The treated film is precoated on both sides with 0.1 wt% poly(ethyleneimine), the above-identified BASF-Wyandotte Corporation Polymin P product. The film is air-dried at 100°C. This coating weight is too low to be measured, but is calculed to be in the range of 0.002 grams per m². This primer coated treated substrate is then coated on one side with an acrylate coating to a coating weight of about 1.0 g/m². This acrylate coating was an aqueous ammoniacal solution of terpolymer latex resulting from the polymerization of about 56% by weight of methyl methacrylate, about 40% by weight of methyl acrylate, and about 4% by weight of methacrylic acid. The opposite surface of this film structure was coated with the above-identified solution of poly(vinylalcohol), cross-linking agent and catalyst. The solution was applied utilizing a reverse direct gravure coater and the coated film was passed through a dry-air oven at from 100-125°C. This produced a coating weight of 0.5 g/m².

The dried film is then tested in an oxygen-permeability device in which a stream of dry oxygen is passed throught an aqueous salt solution-permeated pad to control the gas moisture content and then through the film, disposed at right angles to the stream, with the cross-linked poly(vinylalcohol) coating upstream. The oxygen transmitted was determined and the amount of oxygen passed per unit area of film per time period is calculated. Employing the described structure only 0.62 cc of oxygen/m²/day at 50% relative humidity is transmitted. This is superior to any other known polymeric system for inhibiting the transmission of oxygen through a packaging type film.

The cross-linked poly(vinylalcohol) coated film described above is intended to be adhesively laminated to either oriented or unoriented commercially available thermoplastic films such as homopolymer polypropylene film, polypropylene with coated layers, polypropylene with slip additives, polypropylene with coextruded layers, opaque polypropylene, polyethylene, Nylon, polyethylene terephthalate, polycarbonate, polystyrene, etc. A particularly preferred class of films are the polyolefins. The oxygen transmission rate was determined after lamination with 25 micron acrylic coated biaxially oriented polypropylene film. Only 0.46 cc of oxygen per m² per day at 50% relative humidity, 0.69 cc of oxygen per m² per day at 75% relative humidity and 5.81 cc of oxygen per m² per day at 100% relative humidity are transmitted through this lamination. Unexpectedly, this is superior to any other known polymeric structure for inhibiting the transmission of oxygen, even at relative humidities over 50%. The bond strength was found to be excellent, about 200 g/cm.

## Claims

1. A film combination which comprises a polymeric substrate susceptible of transmitting oxygen, at least one side thereof having been treated to a surface free energy of at least about 35 dynes/cm, that side having a primer coating thereon; and, on the primer coating, an oxygen transmission inhibiting layer comprising a cross-linked poly(vinylalcohol).

2. A film combination according to claim 1 wherein the substrate comprises an oriented homopolymer or copolymer of propylene.

3. A film combination according to claim 1 or 2 wherein the poly(vinylalcohol) is cross-linked with an acid catalyzed cross-linking agent.

4. A film combination according to any preceding claim wherein one side of the film has a heat seal layer thereon.

5. A film combination according to any preceding claim wherein both sides of the film have cross-linked poly(vinylalcohol) thereon.

6. A film combination according to any preceding claim wherein the primer comprises poly(ethyleneimine) or the reaction product of an epoxy resin with an acidified amino ethoxylated vinyl polymer.

7. A film combination wherein the substrate includes a coextruded propylene-ethylene copolymer layer on at least one side thereof.

8. A film combination according to claim 7 wherein the propylene-ethylene copolymer is random and the ethylene is present in a minor proportion.

9. A process for the preparation of a low oxygen transmissive film combination, which process comprises:
   (a) providing a polymeric substrate film;
   (b) treating at least one surface thereof so as to have a surface free energy of at least 35 dynes/cm;
   (c) applying a primer coating to at least one of the treated surfaces; and
   (d) applying a poly(vinylalcohol) and cross-linking means composition to at least one primed surface.